Europäisches Patentamt

European Patent Office

Office européen des brevets

(11) Veröffentlichungsnummer: **0 445 715 A2**

# (12) EUROPÄISCHE PATENTANMELDUNG

(21) Anmeldenummer: 91103270.4

(51) Int. Cl.5: **H04N 7/087**

(22) Anmeldetag: 05.03.91

(30) Priorität: 07.03.90 DE 4007133

(43) Veröffentlichungstag der Anmeldung:
11.09.91 Patentblatt 91/37

(84) Benannte Vertragsstaaten:
AT CH DE IT LI

(71) Anmelder: **GRUNDIG E.M.V.
Elektro-Mechanische Versuchsanstalt Max
Grundig holländ. Stiftung & Co. KG.
Kurgartenstrasse 37
W-8510 Fürth/Bay.(DE)**

(72) Erfinder: **Heider, Peter, Grundig E.M.V.
Kurgartenstrasse 37
W-8510 Fuerth(DE)**
Erfinder: **Bayer, Anton, Grundig E.M.V.
Kurgartenstrasse 37
W-8510 Fuerth(DE)**

(54) **Fernsehempfänger mit zyklischer Fernsehtextwiedergabe.**

(57) Die Erfindung betrifft einen Fernsehempfänger mit einer Bedieneinheit, einem Fernsehtextdecoder und einem Mikrocomputer, welcher derart programmierbar ist, daß eine zyklische Fernsehtextwiedergabe erfolgt, wobei die Zeitdauer für die Darstellung jeder Fernsehtextseite des Zyklusses individuell gewählt werden kann.

Die Erfindung betrifft einen Fernsehempfänger mit den im Oberbegriff des Anspruchs 1 angegebenen Merkmalen.

Aus der DE-OS 36 23 925 ist bereits ein Fernsehempfänger bekannt, welcher einen Fernsehtextdecoder und einen Mehrseitenspeicher aufweist. Mittels einer Bedieneinheit können für jede Programmquelle mehrere bevorzugte Fernsehtextseiten ausgewählt werden, welche dann bei einem späteren Einschalten des Fernsehempfängers oder beim Programmwechsel automatisch im Mehrseitenspeicher abgelegt werden. Diese Fernsehtextseiten stehen nach ihrer Abspeicherung zum verzögerungsfreien Abruf bzw. zur verzögerungsfreien Darstellung auf dem Bildschirm zur Verfügung, wobei der Aufruf durch Betätigung einer Taste der Bedieneinheit erfolgt. Sollen mittels des bekannten Fernsehempfängers mehrere Videotextseiten nacheinander dargestellt werden, so ist die Anwesenheit einer Bedienperson notwendig.

Weiterhin ist es bereits bekannt, in einem Fernsehtextsender einer Seitennummer mehrere Folgeseiten zuzuordnen, welche im Fernsehtextzyklus nacheinander übertragen werden. Hat ein Fernsehzuschauer die genannte Seite angewählt, so werden auf dem Bildschirm die einzelnen Folgeseiten nacheinander zyklisch dargestellt. Die meisten Bedieneinheiten weisen eine Stop-Taste auf, bei deren Betätigung der genannte Zyklus unterbrochen wird, so daß die gerade dargestellte Seite solange angezeigt wird, wie es der Benutzer wünscht. Auch bei diesem System ist die Anwesenheit einer Bedienperson notwendig, wenn Fernsehtextseiten unterschiedlicher Seitennummern nacheinander auf dem Bildschirm dargestellt werden sollen.

Die beiden vorstehend beschriebenen Systeme sind folglich für einen Vorführbetrieb, bei dem Fernsehtextseiten unterschiedlicher Seitennummer nacheinander auf dem Bildschirm angezeigt werden, nicht geeignet.

Der Erfindung liegt die Aufgabe zugrunde, einen Fernsehempfänger mit den im Oberbegriff des Anspruchs angegebenen Merkmalen derart weiterzubilden, daß er sich für einen Vorführbetrieb eignet, bei dem Fernsehtextseiten unterschiedlicher Seitennummern nacheinander auf dem Bildschirm angezeigt werden.

Diese Aufgabe wird bei einem Fernsehempfänger mit den im Oberbegriff des Patentanspruchs angegebenen Merkmalen durch die im kennzeichnenden Teil des Patentanspruchs angegebenen Merkmale gelöst.

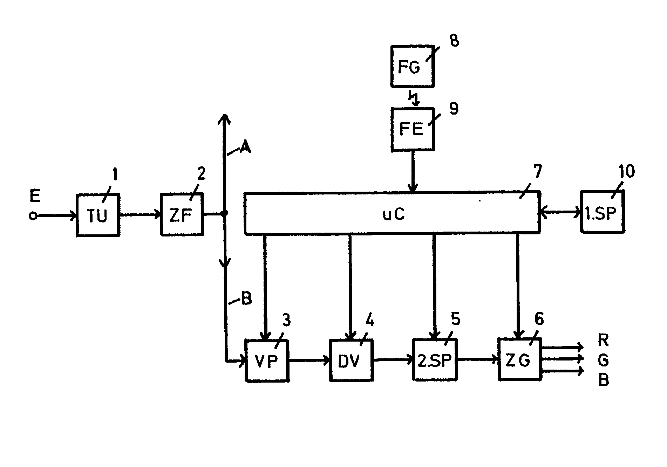

Die Vorteile der Erfindung bestehen insbesondere darin, daß mittels des beanspruchten Fernsehempfängers ein automatischer Fernsehtext-Vorführbetrieb durchgeführt werden kann, ohne daß die Anwesenheit einer Bedienperson notwendig ist. Beispielsweise kann ein Fernsehempfänger nach der Erfindung in den Wartehallen von Flughäfen installiert und zur zyklischen Wiedergabe sämtlicher Fernsehtextseiten eines Senders verwendet werden, welche die aktuellen Ankunfts- und Abflugzeiten beinhalten. Weiterhin kann ein Fernsehempfänger nach der Erfindung in Reisebüros installiert und zur zyklischen Wiedergabe sämtlicher Fernsehtextseiten eines Senders verwendet werden, welche Informationen über das aktuelle Wetter in den bekanntesten Urlaubsländern sowie über aktuelle Straßenverhältnisse beinhalten. Ferner kann ein Fernsehempfänger nach der Erfindung in Hotelhallen installiert und zur zyklischen Wiedergabe sämtlicher Fernsehtextseiten eines Senders verwendet werden, welche aktuelle Nachrichten beinhalten. Ein Fernsehempfänger nach der Erfindung kann auch von einem Fernsehzuschauer verwendet werden, welcher sich regelmäßig sämtliche Fernsehtextseiten, die eine Programmvorschau enthalten, anzeigen lassen möchte. Weitere Vorteile und Anwendungsmöglichkeiten eines Fernsehempfängers nach der Erfindung ergeben sich aus der Erläuterung eines Ausführungsbeispiels anhand der Figur.

Die Figur zeigt die zum Verständnis der Erfindung notwendigen Teile eines Fernsehempfängers in Form eines Blockschaltbildes. Dem Eingang E wird ein über eine herkömmliche Übertragungsstrecke übertragenes hochfrequentes Fernsehsignal zugeführt. Dieses wird in bekannter Weise unter Verwendung eines Tuners 1 und eines ZF-Verstärkers 2 in ein zusammengesetztes Farbfernsehsignal FBAS umgewandelt. Das FBAS-Signal wird zum einen über einen Signalweg A, dessen Aufbau nicht im einzelnen dargestellt ist, den herkömmlichen Video- und Audio-Signalverarbeitungsschaltungen des Fernsehempfängers zugeführt.

Weiterhin wird das FBAS-Signal über einen Signalweg B einem Fernsehtextdecoder zugeführt. Dieser besteht aus einem Videoprozessor 3, einer Datenverarbeitungsschaltung 4, einem Mehrseitenspeicher 5, welcher beispielsweise zur Abspeicherung des Inhaltes von 16 Fernsehtextseiten ausgelegt ist, und einem Zeichengenerator 6, welche jeweils von einem Mikrocomputer 7 gesteuert werden.

Mittels eines Fernbedienungsgebers 8 werden - beispielsweise im Rahmen eines Programmierdialogs unter Verwendung des Fernsehbildschirms als Anzeige - nacheinander die Seitennummern mehrerer gewünschter Fernsehtextseiten und zu jeder Seite eine gewünschte Zeitdauer eingegeben. Die eingegebenen Signale werden von einem Fernbedienempfänger 9 dem Mikrocomputer 7 zugeführt. Dieser initiiert die Abspeicherung von Signalen, die den Seitennummern und der jeweils zugehörigen Zeitdauer entsprechen, in einer Speichereinheit 10.

Bei einem späteren Einschalten des Fernsehempfängers oder bei Betätigung einer bestimmten Taste oder Tastenkombination des Fernbedienungsgebers FG lädt der Mikrocomputer 7 die abgespeicherten Seitennummern und die jeweils zugehörige Zeitdauerinformation in seinen Arbeitsspeicher und steuert den Videoprozessor 3, die Datenverarbeitungsschaltung 4 und den Mehrseitenspeicher 5 zur Abspeicherung des Inhalts derjenigen Fernsehtextseiten an, deren Seitennummern in den Arbeitsspeicher des Mikrocomputers geladen wurden. Dabei werden im Videoprozessor 3 die digitalen Fernsehtextsignale, die in bestimmten Zeilen der vertikalen Austastlücken des Fernsehsignals enthalten sind, aus dem Fernsehsignal abgetrennt und zur Datenverarbeitungsschaltung 4 weitergegeben. Die Datenverarbeitungsschaltung 4 unterzieht die seriell ankommenden Daten einer Paritäts- und Hammingcode-Prüfung, wandelt sie in parallele Datenwörter um und leitet diese an den Mehrseitenspeicher 5 weiter, wo sie nach ihrer Abspeicherung verzögerungsfrei zur Verfügung stehen.

Die im Mehrseitenspeicher 5 abgespeicherten Datenwörter, die jeweils einer Fernsehtextseite entsprechen, werden schließlich unter Steuerung durch den Mikrocomputer 7 ausgelesen und über einen Zeichengenerator 6 als R,G,B-Signale - ggfs. über eine nicht gezeichnete Eintastschaltung, in der die Fernsehtextinformationen dem normalen Fernsehbild überlagert oder in dieses eingetastet werden - dem Bildschirm des Fernsehempfängers zugeführt. Dabei steuert der Mikrocomputer 7 den Auslesevorgang aus dem Mehrseitenspeicher derart, daß die abgespeicherten Fernsehtextseiten automatisch nacheinander und zyklisch auf dem Bildschirm dargestellt werden, wobei die Anzeigedauer jeder einzelnen Fernsehtextseite der im Arbeitsspeicher des Mikrocomputers 7 abgespeicherten, der momentan dargestellten Fernsehtextseite zugehörigen Zeitdauer entspricht, und die Zeitdauer eines Durchlaufes des Zyklusses der Summe der Zeitdauern entspricht, welche im Arbeitsspeicher des Mikrocomputers 7 enthalten sind.

## Patentansprüche

1. Fernsehempfänger mit
   - einer Bedieneinheit zur Auswahl von Fernsehtextseiten aus dem Fernsehtext-Programmangebot eines Fernsehsenders,
   - einer ersten Speichereinheit zur Abspeicherung von Signalen, die den Seitennummern der ausgewählten Fernsehtextseiten entsprechen,
   - einem Fernsehtextdecoder zur Decodierung von in den Vertikalaustastlücken eines Fernsehsignals übertragenen Fernsehtextsignalen, welcher eine zweite Speichereinheit zur Abspeicherung des Inhaltes der ausgewählten Fernsehtextseiten aufweist,
   - einem Mikrocomputer zur Auswertung der mittels der Bedieneinheit eingegebenen Befehle und zur Speichersteuerung, und
   - einem Bildschirm zur Fernsehtextdarstellung,

**dadurch gekennzeichnet,** daß

   - in der ersten Speichereinheit (10) zu jeder der Seitennummern eine mittels der Bedieneinheit (8) eingegebene Zeitdauer abgespeichert ist, und
   - der Mikrocomputer (7) die zweite Speichereinheit (5) derart adressiert, daß eine zyklische Wiedergabe der abgespeicherten Fernsehtextseiten auf dem Bildschirm erfolgt, wobei jede der dargestellten Seiten für die ihr zugeordnete Zeitdauer angezeigt wird.